# EUROPEAN PATENT APPLICATION

(11) **EP 2 223 955 A1**
(43) Date of publication of application: **01.09.2010**
(21) Application number: 08858296.0
(22) Date of filing: 26.11.2008
(51) Int. Cl.: C08J 5/16, C08K 7/06, C08L 101/00, D01F 9/145, F16G 5/00, F16G 5/16

(54) **SLIDING MATERIAL AND BELT FOR WET-TYPE CONTINUOUSLY VARIABLE TRANSMISSION**

(30) Priority: 03.12.2007 JP 2007312175
(71) Applicant: Toyota Jidosha Kabushiki Kaisha, Toyota-shi, Aichi 471-8571 (JP)
(72) Inventor: MURASE, Hiroyuki, Toyota-shi Aichi 471-8571 (JP); SUZUKI, Atsushi, Toyota-shi Aichi 471-8571 (JP); OKUYAMA, Masaru, Aichi-gun Aichi 480-1192 (JP); TOHYAMA, Mamoru, Aichi-gun Aichi 480-1192 (JP); OHMORI, Toshihide, Aichi-gun Aichi 480-1192 (JP)
(74) Representative: Albutt, Anthony John
(86) International application number: PCT/JP2008/071458
(87) International publication number: WO 2009/072425

(57) **Abstract**

The invention provides a sliding material for use in a wet-type continuously variable transmission, the sliding material including a resin as a matrix and mesophase pitch carbon fibers, the mesophase pitch carbon fibers being included in the sliding material at a content ratio of from 1% by volume to 60% by volume.

## Description

### Technical Field

The invention relates to a sliding material used for a wet-type continuously variable transmission, and a belt for a wet-type continuously variable transmission having the sliding material.

### Background Art

As a continuously variable transmission used for an automobile or the like (hereinafter, simply referred to as "CVT" sometimes), a belt-type CVT is being developed. The belt-type CVT typically includes two pulleys, which are attached to a driving shaft and a driven shaft respectively, and a belt wrapped around these pulleys. In the belt-type CVT, when the pullerys attached to the driving shaft is driven, power is transmitted to the pulley attached to the driven shaft via the belt. In the belt-type CVT, speed can be continuously varied by adjusting the rotation diameter by changing the groove width of the two pulleys attached to the driving shaft and the driven shaft.

Belt-type CVTs include a wet-type CVT and a dry-type CVT. In the wet-type CVT, both the belt and the pulleys are made from metal. The wet-type CVT is used while supplying a lubricant in order to suppress wear or seizure the surface at which the belt and the pulleys contact each other. In particular, when the CVT has a wet-type structure, there are advantages in that wear of the belt and the pulleys can be reduced and wear resistance of the sliding material can be easily ensured, because of the use of lubricant during driving. For these reasons, the wet-type CVT exhibits high reliability and high durability. On the other hand, however, the friction coefficient (µ) between the belt and the pulleys is reduced to be as small as about 0.1, due to the existence of lubricant between the belt and the pulleys. Therefore, in order to increase a friction force that is necessary for power transmission between the belt and the pulleys, there is a need to increase the clamping force of the pulleys. In other words, in the wet-type CVT, there is a problem in that the amount of power loss is increased due to the need for a large clamping force.

In connection with the above, there is a disclosure that excellent wear resistance can be obtained by coating a portion of a V-belt for high load transmission formed by arranging a large number of blocks, which portion faces a pulley groove side portion, with a phenol resin layer formed from a blend resin in which polyacrylonitrile carbon short fibers and coal pitch carbon short fibers are compounded in combination (for example, see Patent Document 1). There is also a disclosure concerning a wet-type friction material including anisotropic carbon fibers (for example, see Patent Document 2).

Further, there is a disclosure concerning the use of a phenol resin, carbon fibers and a powder material as the raw materials for a resin coating. This resin coating is fixed on the surface of an element that constitutes a transmission belt used for a belt-type continuously variable transmission, and the element contacts a variable pulley at this surface (for example, Patent Document 3).
Patent Document 1: Japanese Patent Application Laid-Open No. 2004-239432
Patent Document 2: Japanese Patent Application Laid-Open No. 9-217054
Patent Document 3: Japanese Patent Application Laid-Open No. 2004-144110

### Disclosure of the Invention

### Problems to be Solved by the Invention

However, in the aforementioned V-belt for high load transmission, sufficient friction coefficient may not be obtained and improvement in power loss may not be achieved in a wet environment, although it may be possible to improve wear resistance or the like by reducing the friction coefficient of a belt for a dry transmission. Further, the base material of the aforementioned wet-type sliding material is fibers produced by a wet method such as papermaking. Although this wet-type sliding material exhibits heat resistance that can endure high temperatures, pressure of as high as several hundred MPa is applied to the sliding surface. Additionally, when this wet-type sliding material is used in a belt-type CVT in which the sliding velocity is not greater than several hundred mm/s, wear resistance required for a power transmission member between the belt and the pulleys may not necessarily be ensured. Moreover, even in the aforementioned transmission belt, sufficient friction coefficient under wet environment may not be achieved, and therefore friction forth required for power transmission between the belt and the pulleys may not necessarily be ensured.

As mentioned above, although various studies have been made on the friction coefficient in the belt-type CVT, a sliding material suitable for a wet-type CVT belt system that can maintain a high degree of wear resistance while exhibiting a high degree of friction coefficient (µ) has not yet been established.

The invention has been made in view of the above. Under the aforementioned circumstances, there is a need for a sliding material that has a composition suitable for a wet-type continuously variable transmission and is capable of maintaining wear resistance between the belt and the pulleys at high levels and increasing the friction coefficient (µ) at the contact surface between the belt and the pulleys, as well as reducing power loss by decreasing the clamping force of the pulleys. Further, there is a need for a belt for a wet-type continuously variable transmission that exhibits excellent wear resistance, reduced power loss and a large transmission torque capacity.

### Means for Solving the Problems

The invention has been achieved based on the findings that the friction coefficient (µ) can be increased when a certain type of carbon fiber is used within a certain range.

In order to achieve the aforementioned objective, a sliding material according to a first aspect of the invention is used in a wet-type continuously variable transmission. This sliding material at least includes a resin as a matrix and mesophase pitch carbon fibers, the mesophase pitch carbon fibers being included in the sliding material in an amount of from 1% by volume to 60% by volume.

In the sliding material according to the invention, in which mesophase pitch carbon fibers are selectively compounded with a resin as a matrix, the mesophase pitch carbon fibers, having a structure in which a graphite crystal is highly developed and surfaces of the graphene layers in this graphite crystal structure are oriented in a fiber axis direction, form minute roughness at a sliding surface. As a result, friction is produced between the sliding surface and the counterpart pulleys, thereby increasing the friction coefficient (µ) between the belt and the pulleys.

The graphite crystal structure formed from the mesophase pitch carbon fibers is preferably not an onion structure in which the layered structure of graphene layers is formed in a direction of from the fiber axis to the fiber circumference, when viewed from the fiber axis direction. Preferably, at least part of the fiber circumference of the mesophase pitch carbon fibers when viewed from the fiber axis direction has a radial structure in which the layered structure of graphene layers of the graphite crystal structure is formed in a radial manner in a direction of from the fiber axis side (in particular, from the fiber axis as the center) to the fiber circumference, when viewed from the fiber axis direction. Specifically, in the graphite crystal structure of mesophase pitch carbon fibers, the plane direction of each graphene layer that forms the layered structure of graphite crystal is preferably oriented in a direction of from the fiber axis side (in particular, from the fiber axis as the center) to the fiber circumference in a radial manner, when viewed from the fiber axis direction.

When the carbon fibers in the sliding material and the counterpart pulley (for example, a metal member) are in contact with each other such that the fiber axis direction of carbon fibers and the metal surface of the counterpart pulley are parallel or substantially parallel to each other, it is contemplated that the orientation of graphite structure at a cross section orthogonal to the fiber axis direction of the fibers influences the characteristic of friction coefficient (µ) (hereinafter, also referred to as "µ characteristic"). When the layered structure of graphite crystal in which plural graphene layers are layered is formed along the fiber circumferential direction from the fiber axis at least at an outer circumferential portion, i.e., the entire portion inside the fiber or a portion of fiber circumference or the entire portion thereof, when viewed from the fiber axis direction (in other words, at a cross section orthogonal to the fiber axis direction of the fiber), an onion structure, in which each graphene layer is oriented along the circumference of the fiber or the circumference of concentric circles thereof when viewed from the fiber axis direction, is formed. In that case, when the sliding surface contacts the counterpart pulley, a cylinder and a plane contact each other. On the other hand, when the layered structure of a graphite crystal formed by layering plural graphene layers is formed in a radial manner in a direction of from the fiber axis side (in particular, from the fiber axis as the center) to the fiber circumference at least at an outer circumferential portion, i.e., the entire portion inside the fiber or a portion of fiber circumference or the entire portion thereof, when viewed from the fiber axis direction (in other words, at a cross section orthogonal to the fiber axis direction of the fiber), a radial structure, in which the plane direction of each graphene layer is oriented to the circumference of the fiber in a radial manner from the fiber axis when viewed from the fiber axis direction, is formed. In that case, when the sliding surface contacts the counterpart pulley, lines that collectively form a cylinder and a plane contact each other. Since the contact form of the lines that collectively form a cylinder and the plane is a collective of line contacts, the real contact area is decreased and the real contact pressure is increased, as compared with the form of contact of a cylinder and a plane of the onion structure. As a result, it is assumed that the ability of penetrating an oil film is enhanced and the friction coefficient (µ) is increased.

When the carbon fibers in the sliding material contact the counterpart pulley (for example, a metal member) such that the fiber axis direction of carbon fibers is orthogonal to the surface of the metal member, it is contemplated that the orientation of graphene layers in the fiber axis direction influences the µ characteristic. It is assumed that the higher the orientation of graphene layers in the graphite crystal structure is in a parallel direction with respect to the fiber axis, the more the real contact pressure is increased and the ability of penetrating an oil film is enhanced between the sliding contact and the counterpart pulley. This is because the contact surface of carbon fibers is a collection of line contacts, and the reason for this is that when the crystal structure of carbon fiber at the contact surface is oriented vertically to the pulley-side contact surface, the pulley-side contact surface contacts the end surface of the graphite crystal structure; and that the mesophase pitch carbon fibers include more spaces between the graphene layers during carbonization or graphitization, as compared with PAN carbon fibers. Accordingly, the better the orientation of graphene layers in the graphite crystal structure is, the more the area of line contact with the metal member is and the less the area of surface contact at the graphene layer surface is. By forming a contact surface with the counterpart pulley side from a collective of line contacts, the real contact area is decreased and the real contact pressure is increased, as compared with the plane contact form. Therefore, it is assumed that the ability of penetrating an oil film is enhanced and the friction coefficient (µ) is increased.

The mesophase pitch carbon fibers that constitute the sliding material according to the invention is preferably obtained by allowing a condensed polycyclic aromatic hydrocarbon polymer having a tabular structure to be oriented such that the plane direction of the tabular structure is oriented to the fiber axis direction, during spinning, from the viewpoint of increasing the real contact pressure. The mesophase pitch carbon fibers obtained in the aforementioned manner has a structure in which graphene layers are oriented in a radial manner from the fiber axis to the fiber circumference, and further oriented in a parallel direction with respect to the fiber axis. Moreover, since the mesophase pitch carbon fibers have spaces in the fibers, the real contact area is small and the real contact pressure is large. Therefore, it is possible to enhance the ability of penetrating an oil film, and increase the µ characteristic.

The mesophase pitch carbon fibers that constitute the sliding material according to the first aspect of the invention preferably has a thermal conductivity of 20 W/m·K or higher. The mesophase pitch carbon fibers having a thermal conductivity of 20 W/m·K or higher exhibit a low degree of fiber elongation and are less likely to bend, thereby contacting the counterpart pulley, while the fibers do not bend under high surface pressure. As a result, it is assumed that the ability of penetrating an oil film is enhanced and the friction coefficient (µ) is increased.

Further, the degree of elongation of the mesophase pitch carbon fibers may be 1.5% or less. As mentioned above, the degree of fiber elongation is preferably smaller. Specifically, by making the degree of elongation to be 1.5% or less, it is possible to increase the friction coefficient (µ) upon contact with the pulley-side contact surface of the pulley.

The mesophase pitch carbon fibers according to the invention may have a density of 1.76 kg/m³ or higher, and may have a carbon content ratio of 99% or higher. The carbon fibers having the density and the carbon content ratio within these ranges exhibit a low degree of fiber elongation and are less likely to bend. Therefore, the carbon fibers in the sliding material contact the counterpart pulley side without bending under high surface pressure. Accordingly, it is assumed that the ability of penetrating an oil film is enhanced and the friction coefficient is increased.

The resin that constitutes the sliding material according to the first aspect of the invention is preferably a thermosetting resin, in view of heat resistance and shapability of the sliding material. Among the thermosetting resins, a phenol resin is more suitably used to constitute the sliding material due to its favorable shapability and compatibility with the mesophase pitch carbon fibers.

The belt for a wet continuously variable transmission according to a second aspect of the invention includes plural blocks that transmit power by contacting a pulley-side contact surface of a pulley, the plural blocks including a support and the sliding material according to the first aspect of the invention, the sliding material being provided at least at a portion of a contact surface of the support that contacts the pulley-side contact surface of the pulley; and hoops that support the blocks and have an endless shape.

The belt for a wet-type continuously variable transmission according to the second aspect of the invention includes blocks and hoops. The belt contacts the pulley at the contact surface of the blocks at which the blocks contact the pulley. In the present specification, "pulley-side contact surface" refers to the contact surface of the pulley at which the pulley contacts the blocks, and "contact surface that contacts the pulley-side contact surface" refers to the contact surface of the block side at which the blocks contact the pulley (block-side contact surface).

In the belt for a wet-type continuously variable transmission according to the invention, power is transmitted when the pulley-side contact surface and the block-side contact surface, which are facing each other, contact each other. In the belt for a wet-type continuously variable transmission according to the invention, at least a portion of the block-side contact surface at which power transmission is performed has a resin portion formed from the sliding material according to the first aspect of the invention. This belt for a wet-type continuously variable transmission may have only a portion of the block-side contact surface formed from the sliding material according to the first aspect of the invention, or may have the entire block-side contact surface formed from the sliding material according to the first aspect of the invention. Further, all of the blocks may be coated with the sliding material according to the first aspect of the invention.

Typically, the contact pressure between the blocks and the pulley in a wet-type continuously variable transmission is as large as not less than several hundred MPa. The sliding velocity condition remains at about several ten to several hundred mm/s.
In the second aspect of the invention, by using the sliding material according to the first aspect of the invention that includes mesophase pitch carbon fibers in an amount of from 1 to 60% by volume for a portion or the entire area of the contact surface of the blocks that constitute the belt (block-side contact surface) that contacts the pulley (pulley-side contact surface), it is possible to increase the friction coefficient (µ) between the blocks and the pulley, i.e., between the belt and the pulley, even under the high contact pressure condition as mentioned above. Further, even under conditions that promote formation of an oil film between the belt and the pulley, such as a high sliding velocity region or a low loading region, a large friction coefficient (µ) can be maintained and favorable contact conditions between the belt and the pulley can be retained.

As mentioned above, by using the sliding material and the belt for a wet-type continuously variable transmission according to the invention, the friction coefficient (µ) between the belt and the pulley can be increased and the power loss can be suppressed, thereby making it possible to constitute a wet-type CVT belt having a large transmission torque capacity and excellent wear resistance.

### Effect of the Invention

According to the invention, it is possible to provide a sliding material having a composition suitable for a wet-type continuously variable transmission, and is capable of maintaining a high degree of wear resistance between the belt and the pulley and increasing the friction coefficient (µ) at the contact surfaces thereof, as well as reducing power loss by decreasing the clamping force of the pulley.
Further, the invention can provide a belt for a wet-type continuously variable transmission having excellent wear resistance, reduced power loss, and a large transmission torque capacity.

### Brief Description of the Drawings

Fig. 1 is a chart showing the outline of production process of the mesophase pitch carbon fibers.
Fig. 2A is a schematic view of one example of the fiber cross section having a radial structure.
Fig. 2B is a schematic view of one example of the fiber cross section having a random structure.
Fig. 2C is a schematic view of another example of the fiber cross section having a random structure.
Fig. 2D is a schematic view of another example of the fiber cross section having an onion structure.
Fig. 3 is a schematic view of a belt for a wet-type continuously variable transmission installed in the wet-type continuously variable transmission.
Fig. 4 is an enlarged view of a portion of the belt indicated by A in Fig. 3.
Fig. 5 is an exploded view of a portion of the belt shown in Fig. 3.
Fig. 6 is an enlarged sectional view of the belt shown in Fig. 3 and the driving pulley being in contact with each other.
Fig. 7 is a schematic sectional view showing the structure of a block test piece prepared in Example 1.
Fig. 8 is a schematic view showing the method of block-on-ring friction and wear test.
Fig. 9 is a graph showing the friction coefficient (µ) at a sliding velocity of 500 mm/s.
Fig. 10 is a graph showing the relationship between the friction coefficient (µ) and the sliding velocity (V) of the block test piece (µ-V characteristic).

### Best Mode for Implementing the Invention

In the following, the sliding material according to the invention and a belt for a wet-type continuously variable transmission having the sliding material are explained in detail. It should be recognized that the sliding material according to the invention and the belt for a wet-type continuously variable transmission having the sliding material can be implemented in various embodiments by making modification or reformation within the ability of one skilled in the art, as long as these embodiments do not exceed the idea of the invention.

### <Sliding material>

The sliding material according to the invention is a resin material suitable for the formation of a sliding portion of a wet-type continuously variable transmission. The sliding material at least includes a resin as a matrix and mesophase pitch carbon fibers, and as necessary, further components such as a dispersant, a release agent and a colorant.

### -Mesophase pitch carbon fibers-

The sliding material according to the invention includes at least one kind of mesophase pitch carbon fibers. By including the mesophase pitch carbon fibers, the friction coefficient (µ) at a contact surface of the block (block-side contact surface) that contacts the pulley (pulley-side contact surface) can be increased. In this way, friction between the belt and the pulley can be suppressed.

The sliding material according to the invention includes the mesophase pitch carbon fibers in an amount of from 1% by volume to 60% by volume with respect to the total volume of the sliding material. When the content ratio of the mesophase pitch carbon fibers is less than 1% by volume, the amount of fibers may be too small and wear resistance may not be ensured, and when the content ratio of the mesophase pitch carbon fibers exceeds 60% by volume, the amount of fibers may be too large and the amount of resin may decrease, thereby making it difficult to coat the blocks.
For the reasons as mentioned above, the content ratio of the mesophase pitch carbon fibers is more preferably from 5 to 50% by volume, further preferably from 25 to 50% by volume.

The mesophase pitch carbon fibers are anisotropic pitch carbon fibers that are obtained by melt-spinning from a mesophase pitch as the raw material, and have a graphite crystal structure in which the plane direction of graphene layers is parallel to the fiber axis direction (for example, the direction of graphene layers in at least part of the graphite crystal structure is orthogonal to the fiber axis direction). Since the mesophase pitch carbon fibers have spaces in the fibers, the real contact area at a sliding surface is small and the real contact pressure is large. Therefore, it is assumed that the ability of penetrating an oil film is enhanced and the µ characteristic is improved under wet environment.

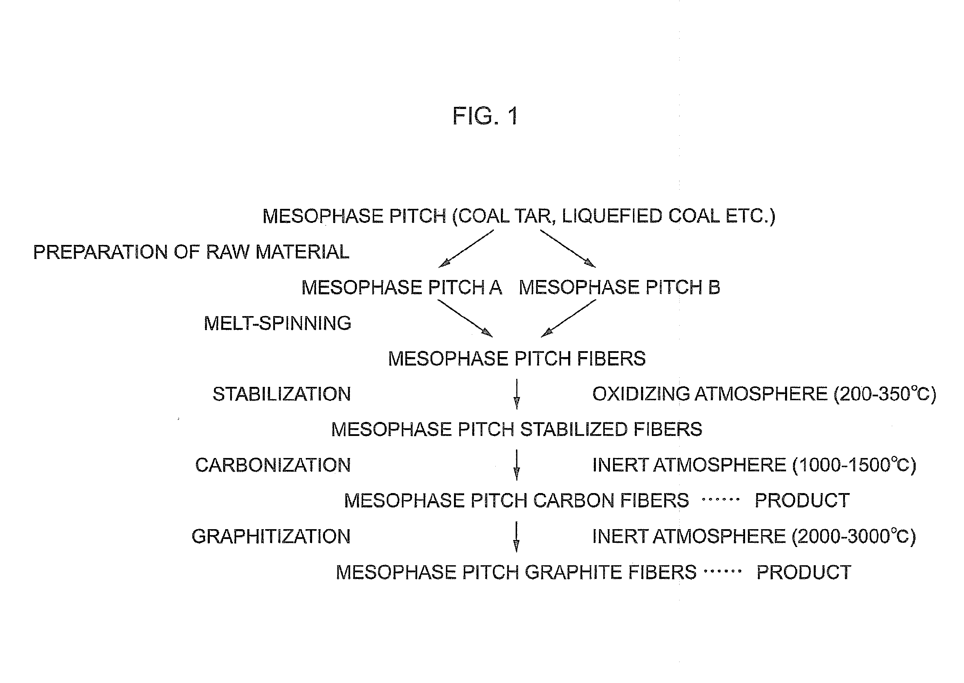

As shown in Fig. 1, mesophase pitch carbon fibers are obtained by performing melt-spinning of a mesophase pitch, and then subjecting the same to stabilization, carbonization and graphitization. Fig. 1 shows the outline of production process of mesophase pitch carbon fibers.
The mesophase pitch is a mixture of a condensed polycyclic aromatic hydrocarbon polymer having a tabular structure, and this mixture exhibits crystallinity. The mesophase pitch can be obtained by polymerizing a condensed polycyclic hydrocarbon having two or more rings, for example an aromatic compound such as naphthalene, or a substance including the same. By performing melt-spinning of this mesophase pitch, mesophase pitch fibers, in which aromatic ring nuclei of the condensed polycyclic aromatic hydrocarbon polymer having a tabular structure are oriented in a fiber axis direction, is obtained in a similar manner to the case in which a liquid crystal aromatic polymer is oriented when it is allowed to pass through, for example, a narrow tube having a circular section. By oxidizing this mesophase pitch fibers in a gas phase during the process of stabilization, a crosslinked structure is formed and whereby the mesophase pitch fibers are treated so as not to melt by heat. Thereafter, by subjecting the mesophase pitch fibers to a heat treatment at high temperature in an inert atmosphere, elements other than carbon are eliminated and carbon fibers are obtained. This process is referred to as carbonization or graphitization, depending on the difference in the temperature for the heat treatment. Typically, graphitization is a heat treatment performed at a temperature of 2000° C or higher. Since external force is applied only at the time of allowing the tabular condensed polycyclic aromatic hydrocarbon polymer to pass through a narrow tube during melt-spinning in the production of mesophase pitch carbon fibers, spaces are formed at positions from which the elements other than carbon have been eliminated during the carbonization or graphitization treatment, thereby forming spaces in the fibers. Due to the existence of spaces formed in the fibers in the above manner, it is assumed that the real contact area at the fiber contact surface is decreased while the real contact pressure is increased, thereby enhancing the ability of penetrating an oil film.

Examples of the condensed polycyclic aromatic hydrocarbon polymer having a tabular structure that constitutes the mesophase pitch include a condensed polycyclic hydrocarbon having two or more rings such as naphthalene, and a substance including the same.

On the other hand, PAN carbon fibers have less spaces in the fibers. Therefore, it is assumed that the real contact area of the fiber contact surface is large while the real contact pressure is small, thereby having a lower ability of penetrating an oil film. In the following, difference between the mesophase pitch carbon fibers and the PAN carbon fibers is described from the side of production of PAN carbon fibers.
PAN carbon fibers are obtained by forming PAN fibers by spinning polyacrylonitrile obtained by polymerizing acrylonitrile, and then subjecting the PAN fibers to flameproofing, carbonization and graphitization to obtain PAN carbon fibers. The PAN carbon fibers have a characteristic that when a PAN precursor (PAN flameproof fibers, PAN fibers or PAN) is carbonized and sintered while imparting monoaxial orientation thereto, the obtained carbon fibers have a fiber structure whose orientation is maintained in the subsequent processes. During the process of flameproofing, PAN molecules form a ladder polymer that includes pyridine rings or acridone rings as a main component. The flameproofing treatment is carried out while tensing or elongating the PAN fibers in order to prevent the orientation of the molecules from disintegrating due to thermal contraction. At this time, it is contemplated that although elements other than carbon are eliminated, less spaces are formed in the fibers due to the application of tension or elongation. Thereafter, carbon fibers are obtained via carbonization. As a result, it is presumed that PAN carbon fibers have less space therein, whereby the real contact area is increased and the real contact pressure is decreased as compared with the mesophase pitch fibers, and therefore the ability of penetrating an oil film is lowered.

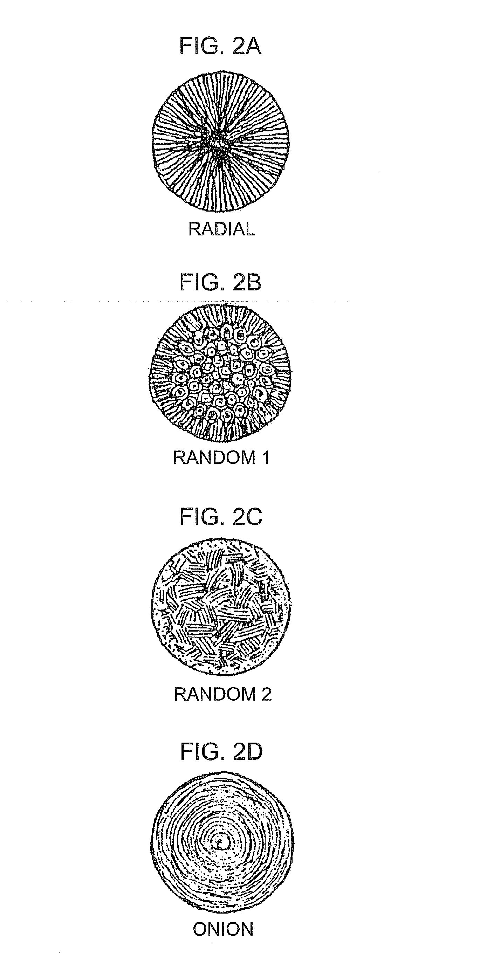

Among the mesophase pitch carbon fibers obtained in the aforementioned process, preferred mesophase pitch carbon fibers do not have an onion structure in which the graphite crystal structure thereof have a layered structure of graphene layers formed in a direction of from the fiber axis side to the fiber circumference when viewed from the fiber axis direction. In other words, the graphene layer surface of the graphite crystal structure is preferably not oriented in a parallel direction along the fiber circumference or the circumference of concentric circles thereof when viewed from the fiber axis direction (i.e., the graphene layers and the fiber circumference or the circumference of concentric circles thereof are positioned so as to face each other). Specifically, the mesophase pitch carbon fibers preferably do not have an onion structure as shown in Fig. 2D, for example, at a cross section of the mesophase carbon fiber that is orthogonal to the fiber axis direction. In the onion structure shown in Fig. 2D, when the carbon fibers contact the counterpart pulley side (for example, a metal member) such that the fiber axis direction of carbon fibers and the metal surface are parallel or substantially parallel to each other, the fiber contact surface takes the form of contact of a cylinder and a plane, rather than a collective of line contacts. Therefore, it is presumed that the real contact area at the fiber contact surface is large and the real contact pressure is small, and therefore the ability of penetrating an oil film is low and the µ cannot be increased.

Further, there are mesophase pitch carbon fibers having a radial structure at a cross section orthogonal to the fiber axis direction, as shown in Fig. 2A, in which the layered structure of graphene layers of the graphite crystal structure is formed in a radial manner in a direction of from the fiber axis as the center to the fiber circumference when viewed from the fiber axis direction, such that the plane direction of the graphene layers is oriented in a radial manner in a direction of from the fiber axis to the fiber circumference; and mesophase pitch carbon fibers having a random structure in which the graphene layer planes are oriented in arbitrary directions, as shown in Fig. 2B or Fig. 2C. From the viewpoint of decreasing the real contact area and increasing the real contact surface, by forming the contact surface of fibers from a collective of line contacts when provided on the sliding surface, the entire portion of the fibers, or a portion or the entire portion of the fiber circumference, of the mesophase pitch carbon fibers preferably has a radial structure. Fig. 2A shows a mesophase pitch carbon fiber having the entire portion thereof being a radial structure. Alternatively, the mesophase pitch carbon fiber may have a radial structure only at the fiber circumference thereof, as shown in Fig. 2B. In the mesophase pitch carbon fiber shown in Fig. 2B, the entire circumference of the fiber cross section has a radial structure, while the inside of the fiber has a random structure.

When the carbon fibers contact the counterpart pulley (metal member) such that the fiber axis direction of the fibers and the metal surface of the counterpart pulley side are parallel or substantially parallel to each other, it is assumed that the orientation of the graphite structure at a cross section orthogonal to the fiber axis of the fibers influences the µ characteristic. Specifically, when the orientation of the graphite crystal structure at a cross section orthogonal to the fiber axis has a radial structure as shown in Fig. 2A or a random structure as shown in Fig. 2B or Fig. 2C, it is assumed that the real contact pressure is large and the ability of penetrating an oil film while supplying lubricant is high, thereby increasing the friction coefficient (µ) at the contact surface between the belt and the pulley. This is because the graphite crystal structure at the fiber contact surface is orientated in a direction of crossing the surface of the counterpart pulley (metal member) and the counter pulley side contacts the end face of the graphite structure, and there are spaces formed during carbonization or graphitization between the graphene layers of the graphite structure, and therefore the contact surface is formed from a collective of line contacts. Since the contact surface with respect to the counterpart pulley is a collective of line contacts, it is contemplated that the real contact area is decreased and the real contact pressure is increased, as compared with the case of plane contact form. On the other hand, when the orientation structure of graphene layers is an onion structure as shown in Fig. 2D, the contact form is of a cylinder and a plane, and the spaces between graphene layers existing in the fibers do not have an influence, whereby the real contact area is increased and the real contact pressure is decreased.

The mesophase pitch carbon fibers may be produced by melt-spinning a mesophase pitch, or may be obtained as a commercially available product. Examples of the commercial products include DIALEAD K233QE, DIALEAD K233HG and DIALEAD K233QG, trade name, available from Mitsubishi Plastics, Inc., and GRANOC XN-100, GRANOC XNG-90 and GRANOC XN-80, trade name, available from Nippon Graphite Fiber Corporation.

The degree of elongation of the mesophase pitch carbon fibers is preferably 1.5% or less, more preferably from 0 to 1.1 %. When the degree of elongation is 1.5% or less, the fibers are less likely to bend, and therefore contact the counterpart pulley side without bending under high surface pressure. Therefore, the ability of penetrating an oil film can be obtained and a high friction coefficient (µ) can be maintained.

The degree of elongation of mesophase pitch carbon fibers is considered to be related to the ease of bending of the fiber, and the smaller the degree of elongation is, the less likely the fiber is to bend. When bending occurs in the fiber, compression force and tension force are distributed across the center axis in the fiber. When the degree of elongation at this time is small, deformation is less likely to occur. Therefore, it is assumed that the fiber contacts the sliding surface of the counter pulley side without bending even under high surface pressure, thereby achieving a high ability of penetrating an oil film. On the other hand, when the degree of elongation is large, it is assumed that the fibers bend and the end portions thereof are deflected away from the sliding surface under high surface pressure, thereby failing to penetrate an oil film.
The more the graphitization is developed, the smaller the degree of elongation of carbon fibers is, and indexes thereof include thermal conductivity, density and carbon content. For example, the higher the thermal conductivity is, the larger the graphite structure is, thereby forming carbon fibers having a continuous graphite structure with a low degree of elongation (on the other hand, when the graphite structure is small, the thermal conductivity thereof is small since the carbon fibers are formed from graphite structures that are linked in a discontinuous manner). When the density is at the same level, there is a tendency that the more the carbon content is, the lower the degree of elongation is. When the carbon content is at the same level, there is a tendency that the higher the density is, the lower the degree of elongation is. Most preferred mesophase pitch carbon fibers have a low degree of elongation, high thermal conductivity, high density, and high carbon content.
The preferred ranges of thermal conductivity, high density and high carbon content of the mesophase pitch carbon fibers are as follows.

The thermal conductivity of the mesophase pitch carbon fibers is preferably 20 W/m·K or higher, more preferably from 20 to 1000 W/m·K. When the thermal conductivity is 20 W/m·K or higher, the degree of elongation is low and the fibers are less likely to bend as mentioned above, and therefore the fibers contact the counter pulley side without bending under high contact pressure. Accordingly, a high degree of friction coefficient (µ) can be maintained.

The density of the mesophase pitch carbon fibers is preferably 1.76 kg/m³ or higher, more preferably from 2.0 to 2.3 kg/m³. When the density is 1.76 kg/m³ or higher, the degree of elongation is low and the fibers are less likely to bend as mentioned above. Accordingly, similar to the above cases, the ability of penetrating an oil film can be obtained and a high degree of friction coefficient (µ) can be maintained.

The carbon content ratio of the mesophase pitch carbon fibers is preferably 99% or higher, more preferably 99.5% or higher, further preferably 99.9% or higher. When the carbon content ratio is 99% is higher, the degree of elongation is low and the fibers are less likely to bend as mentioned above. Accordingly, similar to the above cases, the ability of penetrating an oil film can be obtained and a high degree of friction coefficient (µ) can be maintained.

The sliding material according to the invention may include fibers other than the mesophase pitch carbon fibers, as long as the effect of the invention is not impaired. These fibers include organic fibers and inorganic fibers.

### -Resin-

The sliding material according to the invention includes at least one kind of resin as a matrix. The resin is not particularly limited, and may be arbitrarily selected from known resins.

The resins include thermosetting resins and thermoplastic resins. Exemplary thermosetting resins include phenol resin, urea resin, melamine resin, diallylphthalate resin, unsaturated polyester resin, epoxy resin, aniline resin, furan resin, polyurethane resin, alkylbenzene resin, guanamine resin, and xylene resin. Exemplary thermoplastic resins include polystyrene, ABS resin, AS resin, polyethylene resin, polypropylene resin, vinyl chloride resin, vinylidene chloride resin, vinyl acetate resin, polyvinyl alcohol resin, polyvinyl formal resin, polyvinyl butyral resin, acetyl cellulose resin, nitro cellulose resin, acetyl butyl cellulose resin, cellulose ether resin, methacrylic resin, polyamide resin, polyacetal resin, polycarbonate resin, polyphenylene oxide resin, polysulfone resin, polyethylene terephthalate resin, silicone resin, fluorine resin, polyimide resin, polyamideimide resin, polydiphenylether resin, polymethylpentene resin, ACS resin, AAS resin, chlorinated polyether resin, polybutylene terephthalate resin, and polyether sulfone resin. Among these thermoplastic resins and thermosetting resins, phenol resin is preferred from the viewpoint of heat resistance, shapability and compatibility with the mesophase pitch carbon fibers. The phenol resins include modified or unmodified novolac resin or modified or unmodified resol resin. In particular, cashew-modified phenol resin, which is a phenol resin modified with cashew oil, is preferred.

The content of the resin in the sliding material is not particularly limited, but is preferably from 27% by volume to 98% by volume, more preferably from 40% by volume to 95% by volume, with respect to the total volume of the sliding material, from the viewpoint of shapability and maintaining a high friction coefficient (µ) while ensuring wear resistance of the shaped product.
In order to ensure wear resistance and obtain an effect of increasing µ, a large amount of fibers needs to be included, whereas shapability may decrease when the amount of fibers is too much. If the amount of carbon fibers is too small as a result of placing great importance on shapability, wear resistance and an effect of increasing µ may not be achieved. Accordingly, the content of the resin is preferably within the range as mentioned above.

The sliding material according to the invention may include further components as necessary, such as a reinforcement material, a filler, a dispersant, a release agent and a colorant, in addition to the resin and the mesophase pitch carbon fibers.
Examples of the reinforcement material include organic fibers and inorganic fibers. Examples of the organic fibers include cellulose fibers, polyamide fibers, polyimide fibers and aramid fibers; and examples of the inorganic fibers include silica fibers, mullite fibers, metal fibers, potassium titanate fibers and carbon fibers.
Examples of the filler include inorganic particles of alumina, silica, mullite, silicon nitride, silicon carbide, and zirconia. Cashew dust is also applicable.
Examples of the dispersant include various kinds of aluminum chelate agents.
Examples of the release agent include various kinds of surfactants such as calcium stearate.
Examples of the colorant include carbon black.

### -Production method-

In the following, the method of producing the sliding material according to the invention is described.
The method of producing the sliding material according to the invention is not particularly limited as long as a resin and 1-60% by volume of mesophase pitch carbon fibers can be included by this method, and one exemplary method includes mixing certain materials such as a resin and mesophase pitch carbon fibers while heating the same. Further, when the sliding material according to the invention is formed on the surface of a support as a coating, for example, the sliding material can be formed by placing the support in a certain mold, injecting the sliding material according to the invention into the mold, and then forming the resin portion by curing the resin by carrying out molding while applying heat and pressure. The resin portion may also be formed by placing the support in a certain mold, injecting the sliding material according to the invention into the mold, and then forming the resin portion by cooling the resin after melting the same by carrying out molding while applying heat and pressure. Alternatively, the resin portion may be formed by preparing the sliding material according to the invention in the form of a liquid composition, applying this liquid composition onto the surface of a support by spraying, coating, dipping or any appropriate method, and then drying or curing the resin composition, or cooling the resin composition after melting the same.

The sliding material according to the invention may be used for a wet-type continuouly variable transmission. For example, the surface of the belt that contacts the pulley (belt-side contact surface) of the wet-type continuously variable transmission may be formed from a resin portion formed from the sliding material according to the invention. Alternatively, the surface of the pulley that contacts the belt (pulley-side contact surface) may be formed from a resin portion formed from the sliding material according to the invention. By constituting the surface at which the belt and the pulley contact each other using the sliding material according to the invention, the friction coefficient (µ) between the belt and the pulley may be increased and wear of the belt and the pulley may be suppressed.

### <Belt for wet-type continuously variable transmission>

The belt for a wet-type continuously variable transmission according to the invention includes plural blocks that transmit power by contacting a pulley-side contact surface of a pulley, the plural blocks including a support and the sliding material according to the invention, the sliding material being provided at least at a portion of a contact surface of the support that contacts the pulley-side contact surface of the pulley; and hoops that support the blocks and have an endless shape.

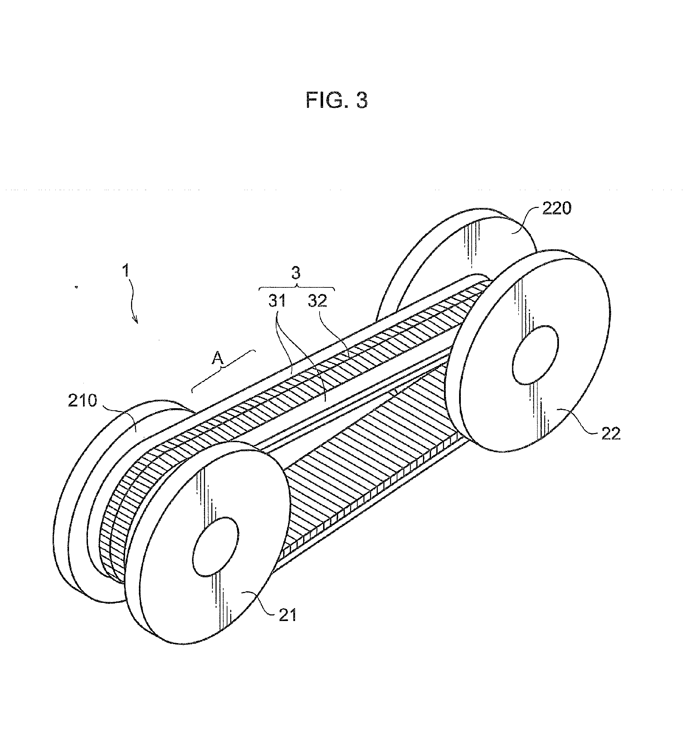

In the following, one exemplary embodiment of the wet-type continuously variable transmission according to the invention is described with reference to Fig. 3. Fig. 3 is a schematic view of the belt for a wet-type continuously variable transmission that is installed in the wet-type continuously variable transmission.
As shown in Fig. 3, wet-type continuously variable transmission 1 includes driving pulley 21, driven pulley 22, and belt 3. Driving pulley 21 is formed from metal and is attached to a driving shaft (not shown). Driving pulley 21 includes two disks that are facing each other. Each disk has a surface 210 facing the opposite disk and having a tapered shape. Driven pulley 22 is formed from metal and is attached to a driven shaft (not shown). Driven pulley 22 includes two disks that are facing each other. Each disk has a surface 220 facing the opposite disk and having a tapered shape. Belt 3 is wrapped around driving pulley 21 and driven pulley 22. Belt 3 includes a pair of hoops 31 and plural blocks 32. These plural blocks 32 are provided between the pair of hoops 31, and are engaged and fixed in a consecutive manner in a circumferential direction of the pair of hoops 31. Belt 3 corresponds to the belt for a wet-type continuously variable transmission according to the invention.

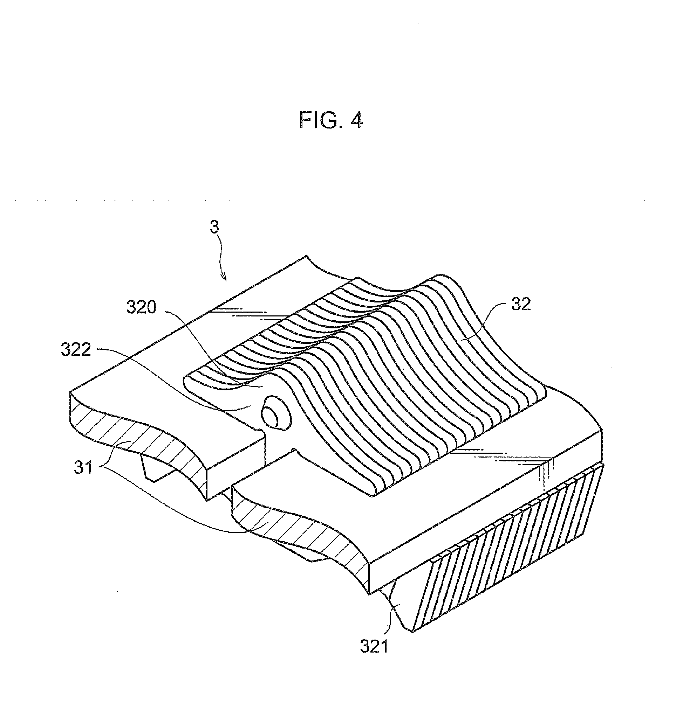

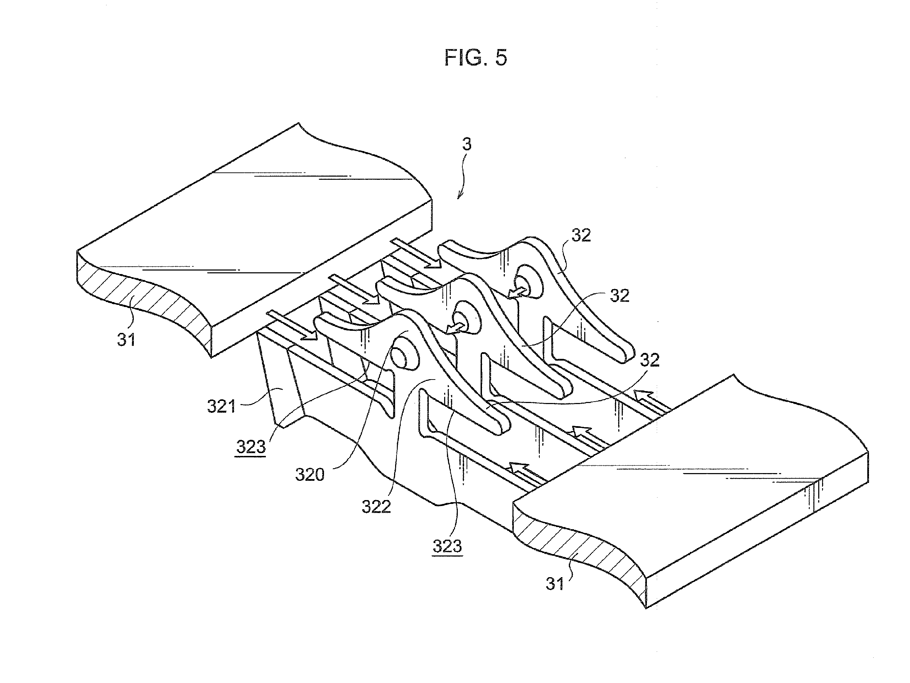

Fig. 4 is an enlarged view of a portion of belt 3 (indicated by A in Fig. 3), and Fig. 5 is an exploded view of a portion of the belt shown in Fig. 3. As shown in Fig. 4 and Fig. 5, belt 3 is formed from a pair of hoops 31 and blocks 32. The pair of hoops 31 is formed by layering thin films made from metal. Each of blocks 32 includes metal support 320 and resin portion 321. Support 320 has an anchor-like shape. Specifically, support 320 has projection 322 having a triangle form at the top, and a pair of engagement grooves 323 having openings at both sides. By inserting the edge of hoop 31 into the engagement groove 323, block 32 is engaged and fixed to hoop 31. Using a metal support as the support of the block like support 320 is preferred also in view of strength of the block. Further, the both ends of support 320 are covered with resin portion 321 formed from the sliding material according to the invention.

Support 320 is preferably subjected to a surface treatment such as shot blasting or shot peening, in order to secure the close contact of support 320 to a resin material (the sliding material according to the invention) that forms resin portion 321. Further, by subjecting support 320 to a surface treatment using a coating liquid such as a silane coupling agent, it is possible to further improve the close contact between the resin material and the support.

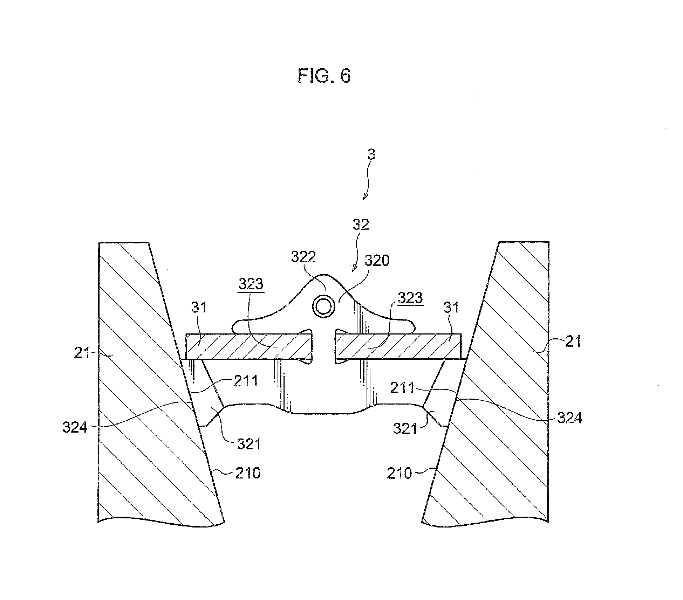

Fig. 6 is an enlarged view of belt 3 and driving pulley 21 being in contact with each other. Fig. 6 shows an enlarged view of the upper part of the driving pulley 21. The state of contact between belt 3 and driven pulley 22 also has a similar structure to that of Fig. 6. As shown in Fig. 6, block 32 has a pair of block-side contact surfaces 324 below engagement grooves 323. The pair of block-side contact surfaces 324 has a tapered shape. Specifically, the distance between the pair of block-side contact surfaces 324 gradually decreases in a direction toward the inner diameter of driving pulley 21 (in a downward direction in Fig. 6).

Block-side contact surfaces 324 are formed from resin portions 321. Resin portions 321 are formed from a sliding material including a resin and mesophase pitch carbon fibers. The mesopahse pitch carbon fibers included in the sliding material has a radial structure, a carbon content ratio of 99.9% or higher, a degree of elongation of 0.3%, a thermal conductivity of 540 W/m·K, a density of 2.2 g/cm³, and a fiber diameter of 11 µm. The content of mesophase pitch carbon fibers in the sliding material is 30% by volume.

On the other hand, surfaces 210 of the two disks that constitute driving pulley 21 which are facing each other also have a tapered shape, as is the case with block-side contact surfaces 324. Specifically, the distance between the pair of surfaces 210 facing each other also gradually decreases in a direction toward the inner diameter of driving pulley 21 as is the case with block-side contact surface 324. Further, portions of surfaces 210 facing each other contact block-side contact surfaces 324, respectively. Portions of surfaces 210 facing each other that is in contact with block-side contact surfaces 324 form pulley-side contact surfaces 211.

Subsequently, the mechanism of power transmission in the belt for a wet-type continuously variable transmission according to this exemplary embodiment is explained.
When driving pulley 21 is driven to rotate, belt 3 is rotated by the contact of pulley-side contact surfaces 211 of driving pulley 21 with block-side contact surfaces 324 of block 32, whereby power is transmitted from driving pulley 21 to belt 3. The power is transmitted to driven pulley 22 via belt 3.

Further, the mechanism of varying speed in the belt for a wet-type continuously variable transmission according to this exemplary embodiment is explained. When the groove width of driving pulley 21 is increased, belt 3 sinks in a direction toward the inner diameter of driving pulley 21 along the tapered shape of surfaces 210. As a result, the rotation diameter of belt 3 being in contact with driving pulley 21 is decreased. On the other hand, when the groove width of driving pulley 21 is decreased, belt 3 moves up in a direction toward the outer diameter of driving pulley 21 along the tapered shape of surfaces 210. As a result, the rotation diameter of belt 3 being in contact with driving pulley 21 is increased. The groove width of driven pulley 22 also changes in response to the changes in the groove width of driving pulley 21. Accordingly, by changing the groove width of the pulleys, the rotation diameter of the belt is adjusted and the speed can be varied in a continuous manner.

In this exemplary embodiment, block-side contact surfaces 324 are formed from resin portions 321 formed from the sliding material according to the invention. Therefore, the friction coefficient (µ) between block 32 and driving pulley 21 or driven pulley 22 is large, and wear between block 32 and driving pulley 21 or driven pulley 22 is suppressed. Accordingly, the wet-type continuously variable transmission using belt 3 including block 32 as described above exhibits a large transmission torque capacity and excellent wear resistance. On the other hand, only a portion of block 32, including block-side contact surface 324, is covered with resin portion 321. Therefore, belt 3 according to this exemplary embodiment can be produced at lower cost, as compared with the case of coating the entire body of block 32 with resin portion 321.

In this exemplary embodiment, explanation is mainly based on the case in which the block that constitutes the belt has an anchor-like shape. However, the shape of the block is not particularly limited. Further, explanation is mainly based on the case in which the whole block-side contact surface is provided with the resin composition. However, it is also possible to cover the entire body of the block with the resin portion, or to form the entire body of the block from the resin.

In this exemplary embodiment, formation of the resin portion is carried out by placing a support in a mold and injecting the sliding material according to the invention into the mold, and then forming the resin portion by curing the resin by carrying out molding while applying heat and pressure. However, the production method of the resin portion is not particularly limited. For example, formation of the resin portion may be carried out by placing a support in a certain mold, injecting the sliding material according to the invention into the mold, and then forming the resin portion by cooling the resin after melting the same by carrying out molding while applying heat and pressure. Alternatively, the resin portion may be formed by preparing the sliding material according to the invention in the form of a liquid composition, applying this liquid composition onto the surface of a support by spraying, coating, dipping or any appropriate method, and then drying or curing the resin composition or cooling the same after melting. Further, the composition of the resin portion is not particularly limited as long as it is formed by using the sliding material according to the invention. The resin as a matrix, the release agent, the dispersant, the colorant or the like may be appropriately selected and used.

### Examples

In the following, the invention is explained in more detail with reference to the examples. However, the invention is not limited to these examples as long as the scope thereof does not exceed the idea of the invention. Unless otherwise specified, "%" is based on mass.

### (Example 1)

### -Preparation of block test piece coated with resin material-

A block test piece was prepared by coating a metal core with a resin material including carbon fibers, a phenol resin powder, a dispersant, a release agent and a colorant, at predetermined contents.

First, a powder mixture was prepared by mixing, as the carbon fibers, carbon fibers having a high carbon content and a radial structure (trade name: DIALEAD K233QE (mesophase pitch carbon fibers), available from Mitsubishi Plastics, Inc., carbon content ratio: 99.9% or higher, degree of elongation: 1.1%, thermal conductivity: 20 W/m·K, density: 2.0 g/cm³, fiber diameter: 11 µm, graphite crystal structure: fiber axis direction-oriented, radial-structure chopped fibers) 41.8% (30% by volume); cashew-modified phenol resin powder (trade name: SUMILITE RESIN PR-12687, available from Sumitomo Bakelite Co., Ltd.) 56.7% (68% by volume); as the dispersant, alkyl acetoacetate aluminum diisopropilate (trade name: PRENACT AL-M, available from Kawaken Fine Chemicals Co.,Ltd., aluminum chelate agent) 0.5%; calcium stearate (release agent ) 0.5%; and carbon black (colorant) 0.5%.

The obtained powder mixture was kneaded while heating to 100° C for 3 minutes, using a labo blast mill, thereby preparing a resin molding material. Subsequently, this resin molding material was pulverized into particles having a diameter of 1 mm or less using a pulverizer, thereby obtaining a mold material powder.

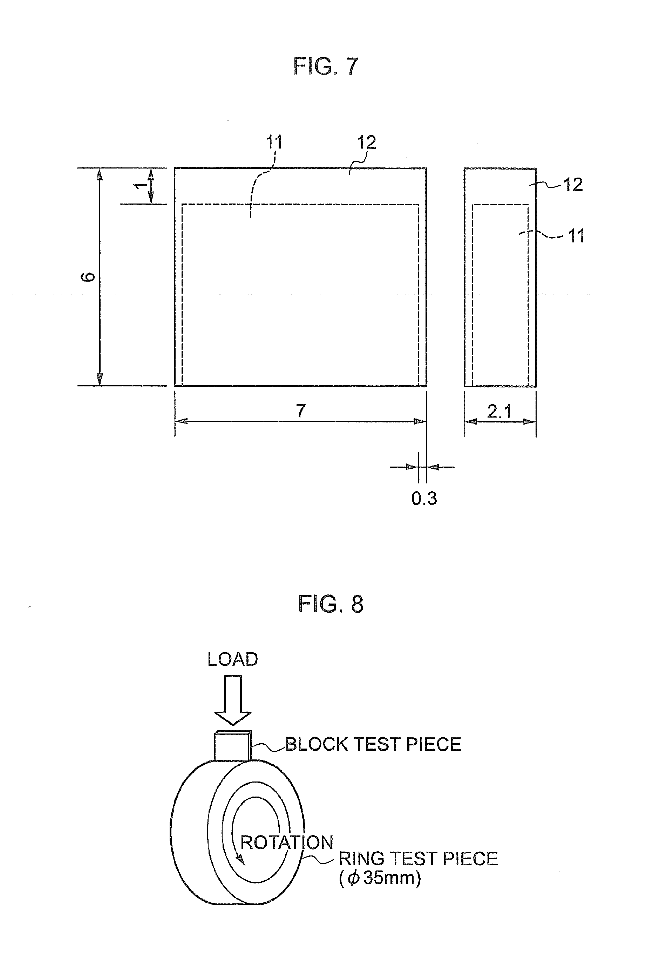

After placing the metal core in a mold heat pressing machine heated to 170° C, the obtained mold material powder was poured therein and this was maintained for 4 to 5 minutes while applying pressure of 20 t or less, thereby preparing a block test piece formed from a metal core coated with a resin material. The test piece as prepared is shown in Fig. 7. As shown in Fig. 7, the coating thicknesses of resin material 12 on metal core 11 were 1.0 mm at a portion corresponding to the sliding portion and 0.3 mm at a side portion. No coating of resin material was formed on the side of the test piece opposite to the side corresponding to the sliding portion having a coating of resin material of 1.0 mm in thickness. The unit of numerical values indicating the length in Fig. 7 is "mm".

This block test piece was subjected to an after-cure treatment of the phenol resin component by placing the same in a thermostatic chamber maintained at 180° C for 1 hour while maintaining the heating. At this time, a layer with significant irregularity in resin component ratio was formed on the coated surface of the block test piece, and this layer was removed by polishing the sliding surface of the block test piece using emery paper of #1200 to #1500 to a thickness of 0.2 to 0.3 mm in a thickness direction of the coated resin material.
The block test piece coated with a resin material was thus prepared.

### (Example 2)

A block test piece coated with a resin material was prepared in a similar manner to Example 1, except that the powder mixture was prepared by replacing DIALEAD K233QE with carbon fibers having a high carbon content and a radial structure (trade name: DIALEAD K233HG (mesophase pitch carbon fibers), available from Mitsubishi Plastics, Inc., carbon content ratio: 99.9% or higher, degree of elongation: 0.3%, thermal conductivity: 540 W/m·K, density: 2.2 g/cm³, fiber diameter: 11 µm, graphite crystal structure: fiber axis direction-oriented, radial-structure chopped fibers) 44.1% (30% by volume); and changing the amount of cashew-modified phenol resin from 56.7% to 54.4% (68% by volume).

### (Example 3)

A block test piece coated with a resin material was prepared in a similar manner to Example 1, except that the powder mixture was prepared by replacing DIALEAD K233QE (41.8%) with carbon fibers having a low carbon content and an onion structure (trade name: TORAYCA T010-6 (PAN carbon fibers), available from Toray Industries, Inc., thermal conductivity: 10.5 W/m·K, density: 1.76 g/cm³, fiber diameter: 7 µm, graphite crystal structure: fiber axis direction-oriented, onion-structure cut fibers) 38.7% (30% by volume); and changing the amount of cashew-modified phenol resin from 56.7% to 59.8% (68% by volume).

### (Comparative Examples 1 and 2)

A steel belt member (a metal member for a wet-type CVT belt; Comparative Example 1) and a resin belt member (a resin material for a dry CVT belt; Comparative Example 2) were prepared as block test pieces coated with a resin material for comparison.

### (Comparative Example 3)

A comparative block test piece coated with a resin material was prepared in a similar manner to Example 1, except that the powder mixture was prepared without using the carbon fibers having high carbon content and a radial structure (DIALEAD K233QE) and changing the amount of cashew-modified phenol resin from 56.7% to 98.5%.

### (Comparative Examples 4 to 7)

Comparative block test pieces coated with a resin material were prepared in a similar manner to Example 1, except that the powder mixture was prepared by changing the type of the carbon fibers having a high carbon content and a radial structure (DIALEAD K233QE) or the amount of the carbon fibers (41.8%), as indicated in the following Table 1.

**[Table 1]**

| | Fiber or Current CVT belt member | | | Resin | | Dispersant | Release agent | Colorant | Total [mass%] |
|---|---|---|---|---|---|---|---|---|---|
| | Type of fiber | mass% | volume % | Phenol resin | | Aluminum chelate agent | Calcium stearate | Carbon black | |
| | | | | mass% | volume% | mass% | mass% | mass% | |
| Example 1 | DIALEAD K233QE high carbon content, fiber axis direction-oriented radial structure carbon fibers | 41.8 | 30 | 56.7 | 68 | 0.5 | 0.5 | 0.5 | 100 |
| Example 2 | DIALEAD K233HG high carbon content, fiber axis direction-oriented radial structure carbon fibers | 44.1 | 30 | 54.4 | 68 | 0.5 | 0.5 | 0.5 | 100 |
| Example 3 | TORAYCA T010-6 low carbon content, fiber axis direction-oriented onion structure carbon fibers | 38.7 | 30 | 59.8 | 68 | 0.5 | 0.5 | 0.5 | 100 |
| Comparative Example 1 | Metal member for wet-type CVT belt | | | | | | | | |
| Comparative Example 2 | Resin member for dry CVT belt | | | | | | | | |
| Comparative Example 3 | Not included | 0 | 0 | 98.5 | 98 | 0.5 | 0.5 | 0.5 | 100 |
| Comparative Example 4 | DIALEAD K233QE high carbon content, fiber axis direction-oriented radial structure carbon fibers | 0.8 | 0.5 | 97.7 | 98 | 0.5 | 0.5 | 0.5 | 100 |
| Comparative Example 5 | DIALEAD K233HG high carbon content, fiber axis direction-oriented | 0.9 | 0.5 | 97.6 | 98 | 0.5 | 0.5 | 0.5 | 100 |
| Comparative Example 6 | radial structure carbon fibers DIALEAD K233QE high carbon content, fiber axis direction-oriented radiall structure carbon fibers | 79.8 | 70 | 18.7 | 27 | 0.5 | 0.5 | 0.5 | 100 |
| Comparative Example 7 | DIALEAD K233HG high carbon content, fiber axis direction-oriented radial structure carbon fibers | 81.3 | 70 | 17.2 | 27 | 0.5 | 0.5 | 0.5 | 100 |

**[Table 2]**

| | DIALEAD K233QE (radial structure) | DIALEAD K233HG (radial structure) | TORAYCA T010-6 (onion structure) |
|---|---|---|---|
| | Mesophase pitch carbon fibers | | PAN carbon fibers |
| Carbon content ratio [%] | 99.9% or higher | | |
| Degree of elongation [%] | 1.1 | 0.3 | |
| Thermal conductivity [W/m·K] | 20 | 540 | 10.5 |
| Density [g/m³] | 2.0 | 2.2 | 1.76 |
| Fiber diameter [µm] | 11 | | 7 |

### (Evaluation)

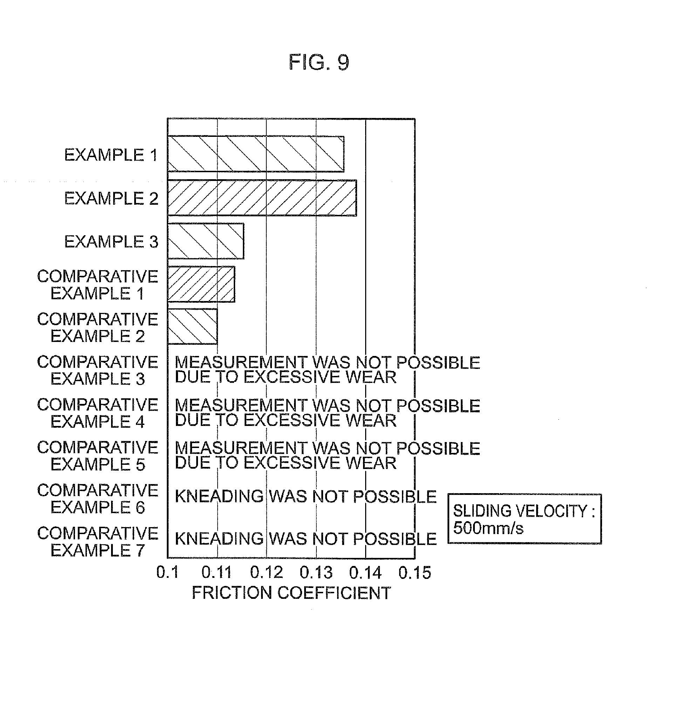

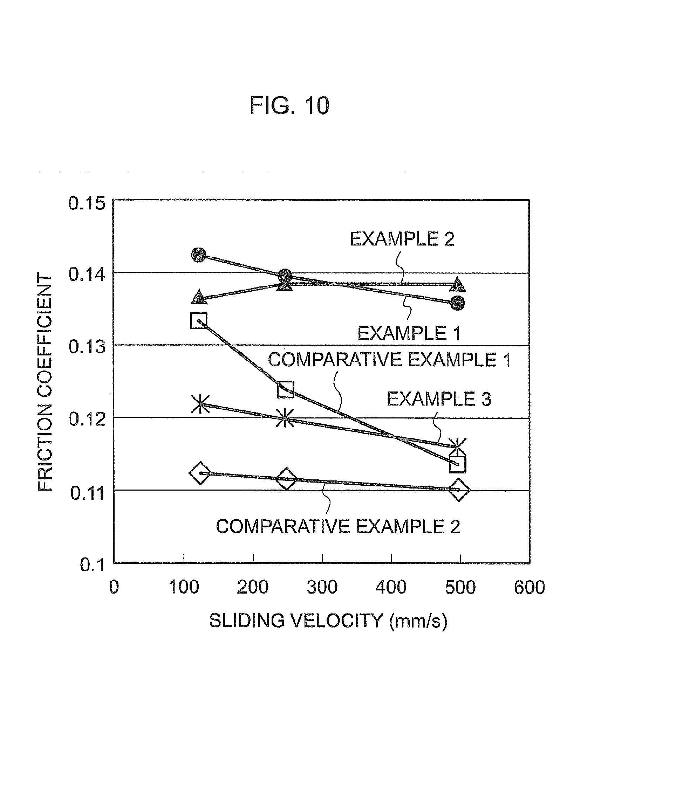

Evaluation of the friction characteristic and the wear resistance of the block test pieces according to the Examples and the Comparative Examples was conducted in accordance with the following method. The evaluation results are shown in Fig. 9 and Fig. 10.

### -1. Evaluation method-

Using the block test pieces prepared in the Examples and the Comparative Examples, a block-on-ring friction and wear test was carried out. The general outline of the test method is described in Fig. 8. The test was carried out in accordance with ASTM D2714-94 under the conditions that the ring test piece was immersed in 100 ml lubricant. After 12 minutes of pre-running, the friction coefficient (µ) was measured under the conditions shown in the following Table 3. The friction coefficient (µ) was measured one minute after setting the sliding velocity. A commercially available fluid for CVT belt (trade name: Toyota Castle Auto Fluid TC) was used as the lubricant. A test piece FALEX Type S-10 (material: carburized SAE4620, outer circumference diameter: 35 mm, width: 8.15 mm) was used as a counterpart ring.

**[Table 3]**

| | Measurement conditions for test | | |
|---|---|---|---|
| Sliding velocity [mm/s] | 125 | 250 | 500 |
| Load[N] | 334 | | |
| Oil temperature [°C] | 100 | | |
| Time [min] | 1 for each measurement | | |

### -2. Evaluation results-

### 2.1 Friction coefficient (µ)

The friction coefficient (µ) of the block test pieces according to Examples 1 to 3 and Comparative Examples 1 to 7 as measured at a sliding velocity of 500 mm/s are shown in Fig. 9. In Fig. 9, the values of friction coefficient (µ) are described based on the value of the metal member for a wet-type CVT belt according to Comparative Example 1 as the standard.
As shown in Fig. 9, the Examples, in which a certain amount of mesophase pitch carbon fibers were compounded, exhibited higher friction coefficients (µ) as compared with the case of conventional metal member for a wet-type CVT belt (Comparative Example 1). In particular, Examples 1 and 2, in which the graphite crystal structure of the carbon fibers was a radial structure, exhibited significantly higher friction coefficients (µ), which were even higher than the friction coefficient (µ) of Example 3 in which the graphite crystal structure of the carbon fibers was an onion structure.
On the other hand, Comparative Example 3, in which carbon fibers were not compounded, was unable to secure wear resistance, thereby causing excessive wear and making it impossible to conduct the measurement. In Comparative Examples 4 and 5, in which the fibers were compounded in an amount of 0.5% by volume, wear resistance was unable to be secured due to the insufficient amount of fibers, thereby causing excessive wear and making it impossible to conduct the measurement. In Comparative Examples 6 and 7, in which the fibers were compounded in an amount of 70% by volume, the amount of resin was insufficient due to the excessive amount of fibers, thereby making it impossible to carry out kneading and failing to produce a test piece.
The above results proved that the amount of carbon fibers to be compounded in a resin material by which an effect of increasing µ was obtained was within a range of from 1 to 60% by volume.

### 2.2 µ-V Characteristic

Fig. 10 shows the relationship between the friction coefficient (µ) and the sliding velocity (V) of the block test pieces according to Examples 1 to 3 and Comparative Examples 1 and 2 (µ-V characteristic; expressed by a negative slope when µ is decreased as V is increased, and expressed by a positive slope when µ is increased as V is increased). In Fig. 10, it is preferred when the degree of negative slope is smaller, since the scratch noises are less likely to occur in the belt-type CVT. It is more preferred when the µ-V characteristic does not show inclination, or shows a positive slope.

As shown in Fig. 10, the Examples, in which a certain amount of mesophase pitch carbon fibers were compounded, exhibited smaller degrees of negative slope of µ-V characteristic, indicating a favorable µ-V characteristic, as compared with the case of metal member for a wet-type CVT belt (Comparative Example 1). In particular, Example 2 exhibited a positive slope of µ-V characteristic, indicating an even more favorable µ-V characteristic.
Further, the friction coefficients (µ) of Examples 1 and 2, in which the graphite crystal structure of the carbon fibers was a radial structure, were higher in the entire range of sliding velocity than that of the conventional metal member for a wet-type CVT belt (Comparative Example 1), and were even higher than that of Example 3, in which the graphite crystal structure of the carbon fibers was an onion structure. Example 3, in which the graphite crystal structure of the carbon fibers was an onion structure, exhibited a higher friction coefficient (µ) in the higher range of sliding velocity than that of the conventional metal member for a wet-type CVT belt.

As shown in Fig. 9 and Fig. 10, when a sliding material, in which a certain amount of mesophase pitch carbon fibers are compounded, is used in place of a conventional steel belt member (metal member) in a wet-type CVT belt system, a high µ characteristic and a favorable µ-V characteristic may be obtained. In particular, the carbon fibers preferably have a graphite crystal structure in which graphene layers are oriented so as not the plane direction of the graphene layers is along the fiber axis direction (preferably substantially parallel to the fiber axis direction), and as not a layered structure in which each graphene layer that forms the layered structure of graphite crystal is layered in a direction of from the fiber axis to the fiber circumference, when viewed from the fiber axis direction (i.e., not an onion structure of the carbon fibers in Example 3). More preferably, the carbon fibers have a structure in which graphene layers are oriented in a direction of from the fiber axis as the center to the fiber circumference, when viewed from the fiber axis direction, at the entire portion of the inside of carbon fibers or at least a portion or the entire portion of the fiber circumference, as is the case with the carbon fibers having a radial structure according to Examples 1 and 2. Moreover, the carbon fibers preferably have a low degree of elongation, i.e., high degrees of thermal conductivity, density and carbon content ratio.

### Explanation of Symbols

- 1: Wet-type continuouly variable transmission
- 21: Driving pulley
- 22: Driven Pulley
- 210, 220: Facing surface
- 211: Pulley-side contact surface
- 3: Belt
- 31: Hoop
- 32: Block
- 320: Support
- 321: Resin portion (resin portion formed from the sliding material)
- 322: Projection
- 323: Engagement groove
- 324: Block-side contact surface

The disclosure of Japanese Patent Application No. 2007-312175 is incorporated by reference in its entirety in the present specification.
All publications, patent applications, and technical standards mentioned in this specification are herein incorporated by reference to the same extent as if each individual publication, patent application, or technical standard was specifically and individually indicated to be incorporated by reference.

## Claims

1. A sliding material for use in a wet-type continuously variable transmission, the sliding material comprising a resin as a matrix and mesophase pitch carbon fibers, the mesophase pitch carbon fibers being included in the sliding material at a content ratio of from 1 % by volume to 60% by volume.

2. The sliding material according to claim 1, wherein the mesophase pitch carbon fibers comprise a graphite crystal structure, the graphite crystal structure not being an onion structure in which a layered structure of graphene layers is formed in a direction of from the fiber axis to the fiber circumference when viewed from the fiber axis direction.

3. The sliding material according to claim 1, wherein the mesophase pitch carbon fibers comprise a graphite crystal structure, the graphite crystal structure having, at least at the fiber circumference of the mesophase pitch carbon fibers when viewed from the fiber axis direction, a radial structure in which a layered structure of graphene layers of the graphite crystal structure is formed in a radial manner in a direction of from the fiber axis as the center to the fiber circumference when viewed from the fiber axis direction.

4. The sliding material according to claim 1, wherein the mesophase pitch carbon fibers are obtained by orienting a condensed polycyclic aromatic hydrocarbon polymer having a tabular structure such that a plane direction of the tabular structure is oriented in the fiber axis direction during spinning.

5. The sliding material according to claim 1, wherein the mesophase pitch carbon fibers have a thermal conductivity of 20 W/m·K or higher.

6. The sliding material according to claim 1, wherein the mesophase pitch carbon fibers have an elongation of 1.5% or less.

7. The sliding material according to claim 1, wherein the mesophase pitch carbon fibers have a density of 1.76 kg/m³ or higher and a carbon content ratio of 99% or higher.

8. The sliding material according to claim 1, wherein the resin is a thermosetting resin.

9. The sliding material according to claim 8, wherein the thermosetting resin is a phenol resin.

10. The sliding material according to claim 1, wherein the content ratio of the mesophase pitch carbon fibers is from 25% by volume to 50% by volume.

11. The sliding material according to claim 9, wherein the phenol resin is a modified or unmodified novolac resin or a modified or unmodified resol resin.

12. The sliding material according to claim 9, wherein the phenol resin is a cashew-modified phenol resin that is modified with cashew oil.

13. A wet-type continuously variable belt comprising:
plural blocks that transmit power by contacting a pulley-side contact surface of a pulley, the plural blocks comprising a support and the sliding material according to claim 1, the sliding material being provided at least at a portion of a contact surface of the support that contacts the pulley-side contact surface of the pulley; and
hoops that support the blocks and have an endless shape.
